# EUROPEAN PATENT SPECIFICATION

(11) **EP 3 723 470 B1**
(45) Date of publication and mention of the grant of the patent: **31.07.2024**
(21) Application number: 18839911.7
(22) Date of filing: 29.11.2018
(51) Int. Cl.: A01G 9/029, A01G 13/02, A01G 27/02, D21J 1/08

(54) **A PLANTING AID PRODUCT**
PFLANZHILFSPRODUKT
PRODUIT D'AIDE À LA PLANTATION

(30) Priority: 11.12.2017 NL 2020050
(43) Date of publication of application: 21.10.2020
(73) Proprietor: Land Life Company B.V., 1092 AD Amsterdam (NL)
(72) Inventor: LÖVENSTEIN, Harrie Maurice, 1078 GA Amsterdam (NL); ASJES, Arnout Jan, 2051 HL Overveen (NL); RUYS, Jurriaan, 1017 RM Amsterdam (NL)
(74) Representative: Cramwinckel, Michiel
(86) International application number: PCT/NL2018/050801
(87) International publication number: WO 2019/117708

(56) References cited:
- WO-A1-2016/118011
- US-A- 4 928 426
- YUN-YONG KIM ET AL: "Effect of W/C Ratio on Durability and Porosity in Cement Mortar with Constant Cement Amount", ADVANCES IN MATERIALS SCIENCE AND ENGINEERING, vol. 2014, 15 April 2014 (2014-04-15), pages 1 - 11, XP055576112, ISSN: 1687-8434, DOI: 10.1155/2014/273460

## Description

The invention is directed to a planting aid product comprising a container comprising an annular compartment for water with a downwardly tapering outer wall and an upwardly tapering inner wall defining a central open channel. A lid closes the upper open end of the annular compartment. In use the planting product is buried together with a plant as positioned in this central open channel. Water as present in the annular compartment is slowly fed to the plant enabling the plant to grow.

WO2015/063243 describes such a planting aid product. This planting aid product is further provided with a wick made of a capillary material to slowly transport water from the annular compartment to the roots of the plant as present in the central channel. The planting aid product is made of a biodegradable pulp. This material will disintegrate in time and become one with the surrounding soil.

A disadvantage of using a wick is that it requires careful positioning when the planting apparatus and the plant are buried into the ground. In practice it has been found that part of a group of plants as planted with this planting aid product did not grow because of an incorrect positioning of the wick.

WO2016/118011 describes a container as part of a planting device. The container has an annular compartment for water with a downwardly tapering outer wall and an upwardly tapering inner wall defining a central open channel, where in use a plant is positioned. The annular compartment is closed at its lower end and open at its upper end. The planting aid product does not require a wick. This is achieved by making use of microholes and/or by application of a coating. A problem of this planting aid is that it is complex to manufacture. US4928426 describes a cement storage device for plants having a permeable shell and a closed wall. The permeable shell is made by using a cement having a higher water content. The aim of the present invention is to provide a simple process to prepare a biodegradable pulp container of a planting aid product.

This is achieved with the following process.

A process to prepare a biodegradable pulp container of a planting aid product, wherein the biodegradable pulp container comprises an annular compartment for water with a downwardly tapering outer wall and an upwardly tapering inner wall defining a central open channel, where in use a plant is positioned, wherein the annular compartment is closed at its lower end and open at its upper end, comprising the following steps:
(a) forming an intermediate container product in a pulping process and drying the intermediate container product,
(b) pressing the intermediate container product as obtained in step (a) in a mould such that the pressure applied in the mould on the upwardly tapering inner wall is less or locally less than the pressure applied in the mould on the downwardly tapering outer wall resulting in that the upwardly tapering inner wall or parts of the inner wall have a lower solid density as compared to the solid density of the downwardly tapering outer wall in the container obtained in step (c), and
(c) releasing the container from the mould.

Because of this pressure difference the upwardly tapering inner wall or parts of the inner wall will have a lower solid density as compared to the solid density of the downwardly tapering outer wall in the container obtained in step (c). This in turn results in that a product is obtained wherein the upwardly tapering inner wall is more water permeable than the downwardly tapering outer wall.

Applicants have found that water may be conveniently transported to the roots of the plant via a water permeable inner wall. It has been found possible to dose the water from the container to the roots of the plant in a controllable and effective manner via the water permeable upwardly tapering inner wall. This simplifies the use of the planting aid product because a wick may be omitted.

The upwardly tapering inner wall is more water permeable than the downwardly tapering outer wall. This avoids that water is transported to areas where no roots are present of the plant and where most of the water is transported to the plant as present the central open channel. By more water permeable is meant that more water will flow at a time via the total area of the inner wall area which is exposed to water in the annual compartment than water will flow via the total area of the outer wall which is exposed to water in the annual compartment. The inner wall and the outer wall are defined such that they have a lower starting point which is the lowest point of the annular compartment or half way any flat lower end of the annular compartment. The water permeability of the inner wall may be achieved by locally increasing the water permeability, for example only the lower part of the inner wall, or by increasing the water permeability of the entire inner wall.

In use the planting aid product will have to release the water present in the annular compartment over a desired time period of between 1 and 12 months to the plant. At the start most of the water will flow via the lower end of the inner wall due to the local high hydrostatic pressure. In time this pressure will decrease when the water level decreases and the water permeability of the inner wall increases. These combined effects result in that the flow of water through the inner wall can be substantially constant over time or steadily increasing. The latter is more preferred because a growing plant will require more water in time. The biodegradable pulp material of the wall will become soggy and will let water pass the wall more easily. Preferably the water permeability of the upwardly tapering inner wall is at least 0.05 litre/day as measured 5 days after the annular compartment is filled water to 95% of its vertical height.

The upwardly tapering inner wall and the downwardly tapering outer wall are composed of a biodegradable pulp. Preferably the container and the lid are composed of a biodegradable pulp. Suitable biodegradable materials are for example bio-degradable polymers such as PLA (poly lactic acid). Preferably the biodegradable material is biodegradable pulp which may be made from a biodegradable lignocellulosic fibrous material. Typically such lignocellulosic fibrous material is obtained by chemically or mechanically separating the cellulose fibres from wood, waste of crops, fibre crops or waste paper, especially waste carton. Examples of fibre crops are *Miscanthus spp,* Bamboo *(Bambusoideae spp)* or Guayule (*Parthenium argentatum*)*.*

The difference in water permeability of the inner and outer wall is at least in part a result of a lower solid density expressed in weight per volume of the biodegradable pulp material of the inner wall or parts of the inner wall as compared to the solid density of the outer wall. The variation in water permeability of a wall composed of biodegradable pulp is found dependent of the solid density of the wall. As will be explained in more detail below applicants found that this solid density may be varied by for example pressing a wall of biodegradable pulp in a mould. By pressing harder the solid density of the wall will increase and the water permeability will decrease.

The walls of the container may comprise a water-resistant compound which is evenly distributed within the walls or evenly distributed as a coating on the walls. An evenly distributed water-resistant compound within the walls may be obtained by adding a water-resistant compound, such as a wax, to the emulsion containing pulp fibres as described in WO2015/063243. Examples of such processes are described in GB456434 and GB276395. A coating of a water-resistant compound may be sprayed on the walls of the container as will be described below in more detail. The walls of the container and/or lid product of the planting aid product may further comprise additives such as bio-repellents or plant based pesticides to protect the container pulp product against insects and small mammals. Example of a suitable bio-repellent is capsaicin.

The difference in water permeability of the inner and outer wall may achieved alone or in combination with the above described difference in solid density by having a downwardly tapering outer wall comprising of a water-resistant compound which may be present on or in the wall. The upwardly tapering inner wall may optionally comprise a water-resistant compound on or in the wall. The difference in water permeability of the inner and outer wall will depend on the content, the quality and/or the position of the water-resistant compound in or on the inner and outer walls. By difference in quality is meant that the compounds used have a different chemical structure. Preferably the water-resistant compound is present on the surface of the walls. This results in walls which are more water resistant as compared to walls having evenly distributed water-resistant compound within the walls. Further it is easier to make such a product having variations in water-resistant compound as will be described further below which enhance the difference of the water permeability between outer and inner walls.

The water-resistant compound is preferably a hydrophobic compound. The compound may be added as a liquid which solidifies in or on the final product or added as a reactive composition which cures in or on the final product. A water-resistant compound which may be added as a liquid preferably have a melting point of above 40 °C and more preferably above 60 °C and preferably below 200 °C. Preferably such water-resistant compound is a wax. Waxes having the desired melting points are known to achieve a good water-resistance. The wax may be a petroleum or natural derived paraffin or microwax or a mixture thereof. Optionally the wax may be obtained by a Fischer-Tropsch reaction starting from hydrogen and carbon monoxide. The melting temperature of the wax may be between 60°C and 120°C and preferably between 70 and 120 °C. Reactive compositions are preferably biodegradable compositions such as cross-linked polysaccharide derivates.

The amount of water-resistant compound applied per surface area of the lid pulp product can be easily determined by the skilled person. For a typical wax having the preferred melting properties as described the amount of wax may be between 5 and 1000 g/m² and more preferably between 50 and 600 g/m² . Wall parts having a higher water permeability may have a wax content of between 5 and 50 g/m² in combination with an outer wall having a wax content of more than 100, preferably more than 200 and even more preferably more than 400 g/m².

Suitably no wick is present to transport water from the annular compartment to the plant in the central channel. The planting aid product is advantageous because it does not require a wick to transport water from the annular compartment to the plant. This however does not prevent one to also use a wick in the planting aid product although it is preferred that no wick is present or required to transport water from the annular compartment to the plant in the central channel. By a wick is here meant any means which uses capillary forces to direct water in an upwardly direction from the annular compartment by capillary forces.

A disadvantage of using a wick is that it requires careful positioning when the planting apparatus and the plant are buried into the ground. Furthermore wicks may become contaminated with for example salts which negatively influence the capillary working of the wick. Especially biodegradable wicks are sensitive for degradation due to microorganisms. The most suited wicks are therefore not biodegradable which is however not desired in this product. Furthermore, in practice it has been found that part of a group of plants as planted with this planting aid product did not grow because of an incorrect positioning of the wick. So by being able to use the product without the wick a more reliable and simpler to use product is obtained. A further advantage is that the root collar of the plant can now be positioned lower relative to the planting aid product. The root collar may now even be positioned at the level of the lower end of the annular compartment instead of about half way the central open channel. This simplifies the planting procedure and avoids failures. Such positioning would be more complex or even not possible when a wick is used to transport the water to the plant.

The planting aid product as obtained by any one of the above described processes can be used to provide a plant in the central channel with water from the annular compartment over a period of time of at least one month wherein the majority of water transported from the annular compartment to the plant in the period of time flows via the water permeable upwardly tapering inner wall of the planting aid product.

Applicants have developed a new process which enables to vary the local water permeability in the walls of the planting aid product. The invention is also directed to the following process.

The invention concerns a process to prepare a biodegradable pulp container of a planting aid product, the process being according to claim 1.

Because of the pressure difference provided in the process according to claim 1 the upwardly tapering inner wall or parts of the inner wall will have a lower solid density as compared to the solid density of the downwardly tapering outer wall in the container obtained in step (c). This in turn results in that a product is obtained wherein the upwardly tapering inner wall is more water permeable than the downwardly tapering outer wall. When parts of the wall are pressed less than outer parts it is preferred to press the lower part of the upwardly tapering inner wall less than the other wall parts. This lower part has the shape of a slice of the wall.

The pressure in step (b) as exercised on the lid pulp product is preferably above 0.1 MPa and more preferably above 1 MPa. Suitably the pressure is below 5 MPa and more preferably below 2 MPa. The difference in pressure applied on the upwardly tapering inner wall and the downwardly tapering outer wall may be between .0.2 and 2 MPa. The temperature at which step (b) is performed is preferably above 60 ⁰C and more preferably between 100 and 140 ⁰C.

The pressure applied on the inner upwardly tapering wall may be locally lower than the pressure applied on the other parts of the container. This may be achieved by adding recesses to the mould at locations where a lower pressure is desired.

A water-resistant compound as described above may be added in the pulping process resulting in an intermediate container product comprising an evenly distributed water-resistant compound. An examples of a class of possible water-resistant compounds which may be added in the pulping process are alkyl ketene dimers (AKDs). Preferably or in addition to adding a water-resistant compound in the pulping process a coating comprising of a water-resistant compound may be applied on the surface of the dried intermediate container product obtained in step (a). The temperature at which the coating is applied is preferably above the melting temperature of the water-resistant compound in case the compound is added as a liquid and solidifies as a coating on the walls of the product. In such a process the temperature is suitably reduced to below the melting temperature of the water-resistant compound in step (c). The water-resistant compound is then preferably a wax having a melting temperature of above 60 °C. When the water-resistant compound is added as a reactive composition the temperature is preferably around the optimal curing temperature of such a composition. The water-resistant compound may also be a compound which requires a curing step. Such a curing step may be at an elevated temperature or for example by UV irradiation.

The difference in water permeability of the upwardly tapering inner wall and the downwardly tapering outer wall may be further enhanced by varying the content, quality and/or position of the water-resistant compound as applied as coating on the upwardly tapering inner wall and downwardly tapering outer wall. By position is also meant that the coating may be applied with different amounts on the inside and outside of a wall. The inside in this case faces the annular compartment.

In step (a) a liquid water-resistant compound, preferably a wax, may be sprayed on the surface of the outer and optionally inner walls of the container. The container is preferably dry such that the water-resistant compound can easily adhere and even absorb into the pulp material.

The bio-repellents or plant based pesticides additives may be added to the emulsion containing pulp fibres when preparing a container and/or lid pulp product. Preferably such additives are added to the water-resistant compound when they are added to the product as a coating. In this manner they will be deposited at or close to the surface of the biodegradable lid pulp product which will enhance their function as resistant to insects and the like.

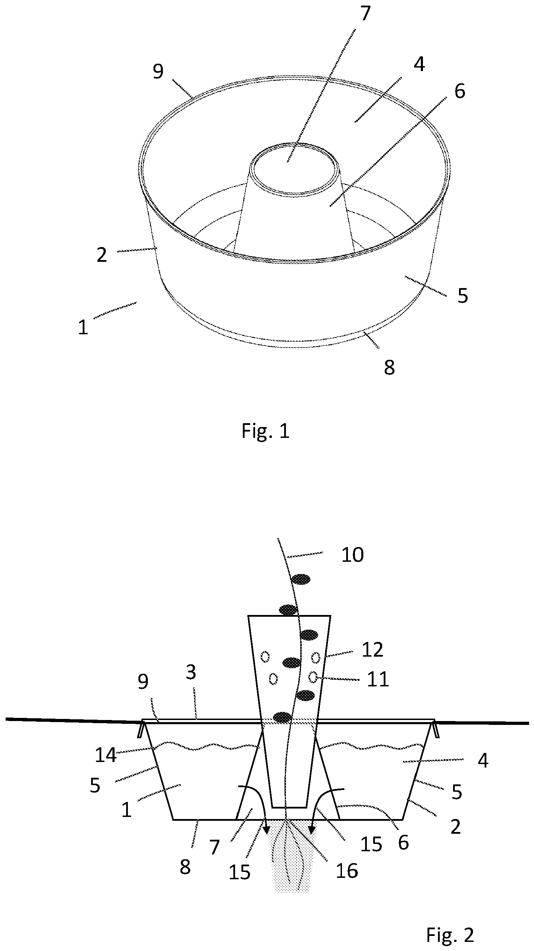

Figure 1 shows a container 2 of a planting aid product 1. The container 2 has a an annular compartment 4 for water with a downwardly tapering outer wall 5 and an upwardly tapering inner wall 6 defining a central open channel 7. In channel 7 a plant may be positioned as shown in Figure 2. The annular compartment 4 is closed at its lower end 8 and open at its upper end 9. A lid 3 as shown in Figure 2 closes the upper open end 9 of the annular compartment 4.
Figure 2 shows a schematic cross-section of the container 2 of Figure 1 in combination with a plant 10 and a lid 3. A shroud 12 surrounds the plant to protect the young plant. Shroud 12 is provided with openings 11 for admitting light and may be as described in WO2015/063243. The lid 3 is a circular lid having a central opening 13 which opening aligns with the central open channel 7 of the container 2. The annular compartment 4 is filled with water having water level 14. Because the water permeability of the upwardly tapering inner wall 6 is substantially higher than the water permeability of the downwardly tapering outer wall 5 a flow of water will result which substantially flows via the inner walls 6 as illustrated by arrows 15. Because no wick is used it is possible to position the root collar 16 of plant 10 at the level of the lower end 8 of the annular compartment 4. Further a soil level 17, which is about flush with the lid 3, is shown to illustrate how the planting aid product 1 is used.

### Example 1

A container as shown in Figure 1 was made from waste carton fibre pulp. The outer wall surface of the outer wall, the inner wall surface of the annular compartment and the outer wall surface of the inner wall is sprayed with liquid wax, which was a mixture of refined hydrocarbon waxes, having a melting point of 85 °. The temperature of the liquid wax as provided to the spraying gun was 120 °C. The amount of wax sprayed on the surface of the planting apparatus was about 100 g/m2. The temperature was allowed to decrease to ambient temperatures such that the wax solidified. The planting apparatus thus obtained was placed in a mould at 125 °C for 15 seconds and wherein the two mould halves were pressed together at a moderate pressure of 0.25 MPa. The product was released from the mould and the temperature was reduced to ambient temperatures such that the wax solidified. The thickness of the wall was 3 mm.

### Example 2

Example 1 was repeated except that the obtained waxed planting apparatus obtained in Example 1 was placed in a mould at 125 °C for 15 seconds and wherein the two mould halves were pressed together at a pressure of 1.5 MPa. The product was released from the mould and the temperature was reduced to ambient temperatures such that the wax solidified. The thickness of the wall was 2 mm.

### Example 3

From the planting apparatuses as obtained in Examples 1-2 a circular cut out was obtained and fixed at the lower open end of a 5 cm diameter tube. The tubes were filed with a layer of 100 cm water and the decrease in water level was measured over time. The results are listed in Table 1. For comparison also a cut out of the starting planting apparatus was obtained, ie not treated with wax. This cut out was also fixed to a tube and filled with 100 cm water.

**Table 1**

| Product - subjected to 100 cm water column pressure | Standard material (no wax, with hot press) | Example 1 (with wax and hot press (low pressure) | Example 2 (with wax and hot press (high pressure) |
|---|---|---|---|
| Thickness of wall (mm) | 4 | 3 | 2 |
| Water level after 10 minutes (cm) | 56,0 | 100,0 | 100,0 |
| Water level after 60 minutes (cm) | < 10 | 92,0 | 99,9 |
| Water level after 1440 minutes (cm) | | 24,0 | 91,5 |

The results in Table 1 show that a pulp wall can be made (Example 1) which has a higher water permeability than a wall pressed at a higher pressure (Example 2). Further the effect of a wax coating on the water permeability is shown.

## Claims

1. A process to prepare a biodegradable pulp container of a planting aid product, wherein the biodegradable pulp container comprises an annular compartment for water with a downwardly tapering outer wall and an upwardly tapering inner wall defining a central open channel, where in use a plant is positioned, wherein the annular compartment is closed at its lower end and open at its upper end, , comprising the following steps:
(a) forming an intermediate container product in a pulping process and drying the intermediate container product, the process being **characterized in**:
(b) pressing the intermediate container product as obtained in step (a) in a mould such that the pressure applied in the mould on the upwardly tapering inner wall is less or locally less than the pressure applied in the mould on the downwardly tapering outer wall resulting **in that** the upwardly tapering inner wall or parts of the inner wall have a lower solid density as compared to the solid density of the downwardly tapering outer wall in the container obtained in step (c), and
(c) releasing the container from the mould.

2. A process according to claim 1, wherein a water-resistant compound is added in the pulping process resulting in an intermediate container product comprising an evenly distributed water-resistant compound.

3. A process according to any one of claims 1-2, wherein on the surface of the dried intermediate container product obtained in step (a) a water-resistant compound having a melting temperature of above 60 °C is sprayed before performing step (b) and wherein the temperature at which step (b) is performed is above the melting temperature of the water-resistant compound.

4. A process according to claim 3, wherein the content, quality and/or position of the water-resistant compound as sprayed on the upwardly tapering inner wall and downwardly tapering outer wall is varied resulting at least in part that the water permeability of the upwardly tapering inner wall is higher than the and downwardly tapering outer wall.

5. A process according to any one of claims 2-4, wherein in step (c) the temperature is reduced to below the melting temperature of the water-resistant compound which is sprayed.

6. Process according to any one of claims 2-5, wherein the water resistant compound as sprayed is a wax having a melting temperature of above 60 °C.

7. Process according to any one of claims 1-6, wherein the water permeability of the upwardly tapering inner wall of the biodegradable pulp container is at least 0.05 litre/day as measured 5 days after the annular compartment is filled water to 95% of its vertical height.

## Patentansprüche

1. Verfahren zum Herstellen eines biologisch abbaubaren Zellstoffbehälters eines Pflanzhilfsmittelprodukts, wobei der biologisch abbaubare Zellstoffbehälter eine ringförmige Kammer für Wasser mit einer sich nach unten verjüngenden Außenwand und einer sich nach oben verjüngenden Innenwand umfasst, die einen zentralen offenen Kanal definieren, in dem bei Verwendung eine Pflanze positioniert ist, wobei die ringförmige Kammer an ihrem unteren Ende geschlossen und an ihrem oberen Ende offen ist,
umfassend die folgenden Schritte:
(a) Ausbilden eines Zwischenbehälterprodukts in einem Aufschlussverfahren und Trocknen des Zwischenbehälterprodukts, wobei das Verfahren
**dadurch gekennzeichnet ist, dass**:
(b) Pressen des in Schritt (a) erhaltenen Zwischenbehälterprodukts in eine Form derart, dass der in der Form auf die sich nach oben verjüngende Innenwand ausgeübte Druck geringer oder lokal geringer als der in der Form auf die sich nach unten verjüngende Außenwand ausgeübte Druck ist, was dazu führt, dass die sich nach oben verjüngende Innenwand oder Teile der Innenwand eine geringere Feststoffdichte im Vergleich zu der Feststoffdichte der sich nach unten verjüngenden Außenwand in dem in Schritt (c) erhaltenen Behälter aufweisen, und
(c) Lösen des Behälters aus der Form.

2. Verfahren nach Anspruch 1, wobei in dem Aufschlussverfahren eine wasserbeständige Verbindung zugegeben wird, was zu einem Zwischenbehälterprodukt führt, das eine gleichmäßig verteilte wasserbeständige Verbindung umfasst.

3. Verfahren nach einem der Ansprüche 1 bis 2, wobei auf die Oberfläche des in Schritt (a) erhaltenen getrockneten Behälterzwischenprodukts vor Durchführen von Schritt (b) eine wasserbeständige Verbindung, die eine Schmelztemperatur von über 60 °C aufweist, aufgesprüht wird, und wobei die Temperatur, bei der Schritt (b) durchgeführt wird, über der Schmelztemperatur der wasserbeständigen Verbindung liegt.

4. Verfahren nach Anspruch 3, wobei der Inhalt, die Qualität und/oder die Position der wasserbeständigen Verbindung, wie sie auf die sich nach oben verjüngende Innenwand und die sich nach unten verjüngende Außenwand gesprüht wird, variiert wird, was mindestens teilweise dazu führt, dass die Wasserdurchlässigkeit der sich nach oben verjüngenden Innenwand höher als die und sich nach unten verjüngenden Außenwand ist.

5. Verfahren nach einem der Ansprüche 2 bis 4, wobei in Schritt (c) die Temperatur auf unterhalb der Schmelztemperatur der wasserbeständigen Verbindung, die aufgesprüht wird, verringert wird.

6. Verfahren nach einem der Ansprüche 2 bis 5, wobei die wasserbeständige Verbindung, wie aufgesprüht, ein Wachs, das einen Schmelzpunkt von über 60 °C aufweist, ist.

7. Verfahren nach einem der Ansprüche 1 bis 6, wobei die Wasserdurchlässigkeit der sich nach oben verjüngenden Innenwand des biologisch abbaubarem Zellstoffbehälters mindestens 0,05 Liter/Tag beträgt, wie 5 Tage, nachdem die ringförmige Kammer bis zu 95 % ihrer vertikalen Höhe mit Wasser gefüllt wurde, gemessen.

## Revendications

1. Procédé pour préparer un récipient en pâte biodégradable d'un produit d'aide à la plantation, dans lequel le récipient en pâte biodégradable comprend un compartiment annulaire pour de l'eau avec une paroi externe tronconique vers le bas et une paroi interne tronconique vers le haut définissant un canal ouvert central, où en cours d'utilisation une plante est positionnée, dans lequel le compartiment annulaire est fermé au niveau de son extrémité inférieure et ouvert au niveau de son extrémité supérieure,
, comprenant les étapes suivantes :
(a) formation d'un produit de récipient intermédiaire dans un procédé de réduction en pâte et séchage du produit de récipient intermédiaire, le procédé étant **caractérisé par** :
(b) le pressage du produit de récipient intermédiaire tel qu'obtenu à l'étape (a) dans un moule de telle sorte que la pression appliquée dans le moule sur la paroi interne tronconique vers le haut est inférieure ou localement inférieure à la pression appliquée dans le moule sur la paroi externe tronconique vers le bas résultant en ce que la paroi interne tronconique vers le haut ou des parties de la paroi interne ont une densité solide plus basse par comparaison avec la densité solide de la paroi externe tronconique vers le bas dans le récipient obtenue à l'étape (c), et
(c) le dégagement du récipient hors du moule.

2. Procédé selon la revendication 1, dans lequel un composé résistant à l'eau est ajouté dans le procédé de réduction en pâte résultant en un produit de récipient intermédiaire comprenant un composé résistant à l'eau uniformément réparti.

3. Procédé selon l'une quelconque des revendications 1 à 2, dans lequel sur la surface du produit de récipient intermédiaire séché obtenu à l'étape (a) un composé résistant à l'eau ayant une température de fusion supérieure à 60 °C est pulvérisé avant la mise en oeuvre de l'étape (b) et dans lequel la température à laquelle l'étape (b) est mise en oeuvre est supérieure à la température de fusion du composé résistant à l'eau.

4. Procédé selon la revendication 3, dans lequel la teneur, la qualité et/ou la position du composé résistant à l'eau tel que pulvérisé sur la paroi interne tronconique vers le haut et la paroi externe tronconique vers le bas sont variées résultant au moins en partie en ce que la perméabilité à l'eau de la paroi interne tronconique vers le haut est supérieure à celle de la et paroi externe tronconique vers le bas.

5. Procédé selon l'une quelconque des revendications 2 à 4, dans lequel à l'étape (c) la température est réduite en dessous de la température de fusion du composé résistant à l'eau qui est pulvérisé.

6. Procédé selon l'une quelconque des revendications 2 à 5, dans lequel le composé résistant à l'eau tel que pulvérisé est une cire ayant une température de fusion supérieure à 60 °C.

7. Procédé selon l'une quelconque des revendications 1 à 6, dans lequel la perméabilité à l'eau de la paroi interne tronconique vers le haut du récipient en pâte biodégradable est d'au moins 0,05 litre/jour telle que mesurée 5 jours après que le compartiment annulaire a été rempli d'eau à 95 % de sa hauteur verticale.
